Europäisches Patentamt

European Patent Office

Office européen des brevets

(19)

(11) EP 0 661 555 B1

(12) FASCICULE DE BREVET EUROPEEN

(45) Date de publication et mention
de la délivrance du brevet:
**03.02.1999 Bulletin 1999/05**

(51) Int Cl.⁶: **G01S 13/78**

(21) Numéro de dépôt: **94402992.5**

(22) Date de dépôt: **22.12.1994**

(54) **Dispositif de détection et de caractérisation d'impulsions radar**

Einrichtung zum Erkennen und Unterscheiden von Radarimpulsen

Detection and discrimination device for radar impulses

(84) Etats contractants désignés:
**DE FR GB IT**

(30) Priorité: **28.12.1993 FR 9315745**

(43) Date de publication de la demande:
**05.07.1995 Bulletin 1995/27**

(73) Titulaire: **THOMSON-CSF**
**75008 Paris (FR)**

(72) Inventeurs:
• **Burgay, Olivier**
**F-92402 Courbevoie Cédex (FR)**
• **Leconte, Philippe**
**F-92402 Courbevoie Cédex (FR)**

(74) Mandataire: **Lincot, Georges et al**
**Thomson-CSF Propriété Intellectuelle,**
**13, Avenue du Président Salvador Allende**
**94117 Arcueil Cédex (FR)**

(56) Documents cités:
**EP-A- 0 577 479          US-A- 5 001 751**

## Description

La présente invention concerne un dispositif de détection et de caractérisation d'impulsions radar et notamment de radar secondaire monopulse.

Dans les radars secondaires monopulses les impulsions doivent répondre à un certain nombre de critères de durée et de niveau pour être considérées comme faisant partie d'un message. La durée est évaluée par exemple pour rejeter celles qui ne vérifient pas les caractéristiques d'une impulsion IFF, IFF étant l'abréviation anglo-saxonne de "Identification Friend or Foe". Le décodage s'effectue par évaluation de l'espacement entre les impulsions constituant le message, les impulsions d'un même message ayant des niveaux comparables. Le niveau relatif des impulsions entre elles permet d'associer les impulsions reçues à un message donné. Comme il arrive que des impulsions faisant partie des messages différents peuvent se chevaucher et provoquer des confusions dans le décodage des messages, le dispositif de détection des radars monopulses a la charge de séparer les impulsions chevauchantes et de les caractériser en largeur et en niveau. Le dispositif de détection tient également compte des différents types de brouillage afin de minimiser leurs effets sur la détection d'impulsions.

Dans l'état actuel de la technique, la détection d'impulsions a lieu de façon analogique. Elle consiste en la suppression de la composante continue du signal et en une détection de front d'impulsions par décalage en niveau du signal incident et comparaison après mémorisation du résultat à une valeur de seuil déterminée. Malheureusement la tenue au brouillage de type AMCW notamment des détecteurs d'impulsion correspondant est médiocre, AMCW étant l'abréviation anglo-saxonne de "Amplitude Modulation Continuous Wave". Egalement les performances des décodeurs de message sont fortement dégradées par un brouillage en impulsions, et ce d'autant plus que ces dispositifs n'effectuent quasiment aucun traitement sur le niveau des impulsions. Enfin, le taux de détection reste faible pour de faible rapport signal à bruit (8 à 10 dB).

Le but de l'invention est de pallier les inconvénients précités.

A cet effet, l'invention a pour objet un dispositif de détection et de caractérisation d'impulsions radar comportant un récepteur d'impulsions caractérisé en ce qu'il comprend un dispositif convertisseur analogique numérique couplé au récepteur d'impulsions, un dispositif d'extraction du niveau continu du signal fourni par le récepteur couplé au dispositif convertisseur, un dispositif de détection de fronts et à un dispositif de caractérisation de brouillage, qui sont couplés au dispositif d'extraction de niveau continu, pour détecter la présence de fronts montant ou descendant et de brouilleurs dans le signal fourni par le récepteur.

D'autres caractéristiques et avantages de l'invention apparaîtront à l'aide de la description qui suit faite en regard des dessins annexés qui représentent :

- La figure 1 un diagramme d'impulsions de radar secondaire monopulse.
- La figure 2 un schéma synoptique général d'un dispositif de détection d'impulsions pour radar secondaire monopulse selon l'invention.
- La figure 3 un mode de réalisation du dispositif d'extraction du niveau continu mis en oeuvre dans le dispositif de la figure 2.
- La figure 4 un mode de réalisation du dispositif de détection de fronts mis en oeuvre dans le dispositif de la figure 2.
- La figure 5 un diagramme pour illustrer un dispositif de la figure 4.
- Les figures 6A et 6B deux modes de situations du niveau du signal hors impulsion.
- La figure 7 un exemple de génération de signaux caractéristiques de fronts de signal.

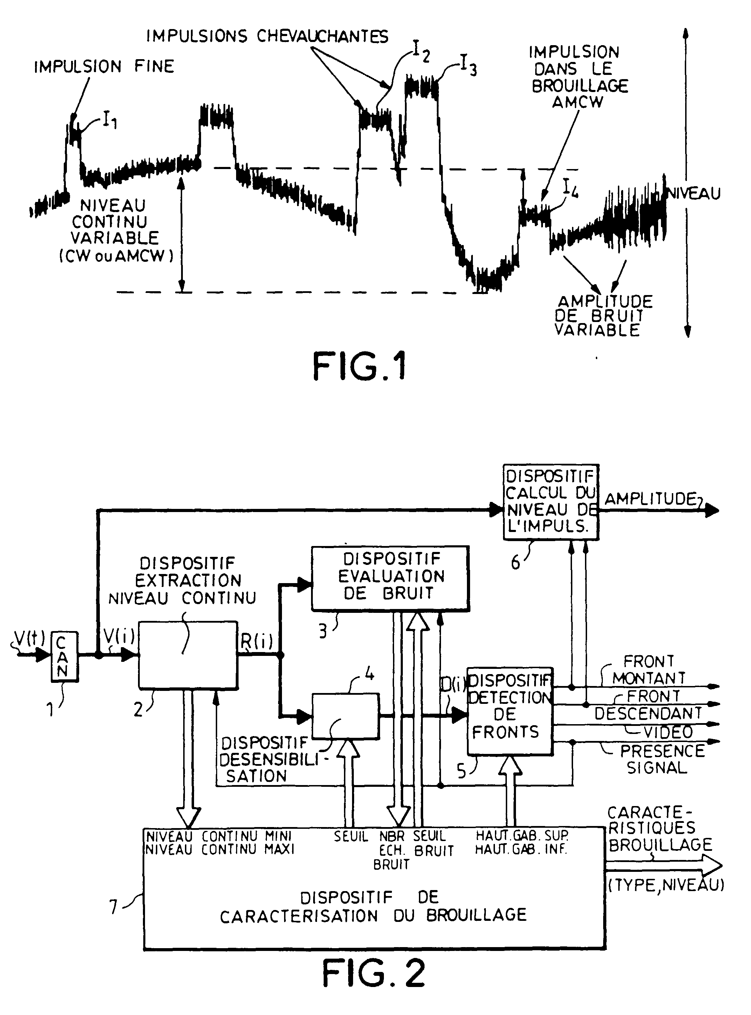

Les différents éléments de signal à prendre en compte dans un système de détection d'impulsions issues d'un radar secondaire sont représentés sur la figure 1. Ceux-ci sont formés dans l'exemple, d'impulsions fines $I_1$, d'impulsions chevauchantes $I_2$, $I_3$ et d'impulsions $I_4$ noyées dans un brouillage type AMCW par exemple. Ces impulsions sont juxtaposées avec un bruit à un niveau continu variable.

Le dispositif de détection selon l'invention qui est représenté à la figure 2 comporte, un convertisseur-analogique numérique 1 (CAN), un dispositif 2 d'extraction de niveau continu, un dispositif 3 pour évaluer le bruit, un dispositif de désensibilisation 4, un dispositif 5 de détection de fronts, un dispositif 6 de calcul de niveau d'impulsion, et un dispositif 7 de caractérisation du brouillage.

Le signal analogique V(t), issu d'un récepteur non représenté, de radar secondaire, est échantillonné par le convertisseur analogique-numérique 1 à une fréquence $f_0$ sur un nombre déterminé de bits N, compatible avec les performances recherchées. Les échantillons binaires obtenus sont appliqués d'une part, à l'entrée du dispositif d'extraction du niveau continu 2 et d'autre part, à l'entrée du dispositif de calcul du niveau d'impulsion 6. Le niveau continu du signal Ri qui est extrait par le dispositif 2 est appliqué, d'une part, à l'entrée du dispositif d'évaluation de bruit 3 et d'autre part, au dispositif de détection de fronts 5 par l'intermédiaire du dispositif de désensibilisation 4.

Le dispositif de calcul du niveau d'impulsion 6 calcule le niveau des impulsions en fonction des échantillons fournis par le convertisseur analogique-numérique 1 et d'informations indicatrices de front montant ou descendant fournies par le dispositif de détection de front 5.

Le dispositif 7 caractérise le brouillage en fonction du niveau continu extrait par le dispositif 2 et du niveau de bruit détecté par l'évaluation de bruit 3.

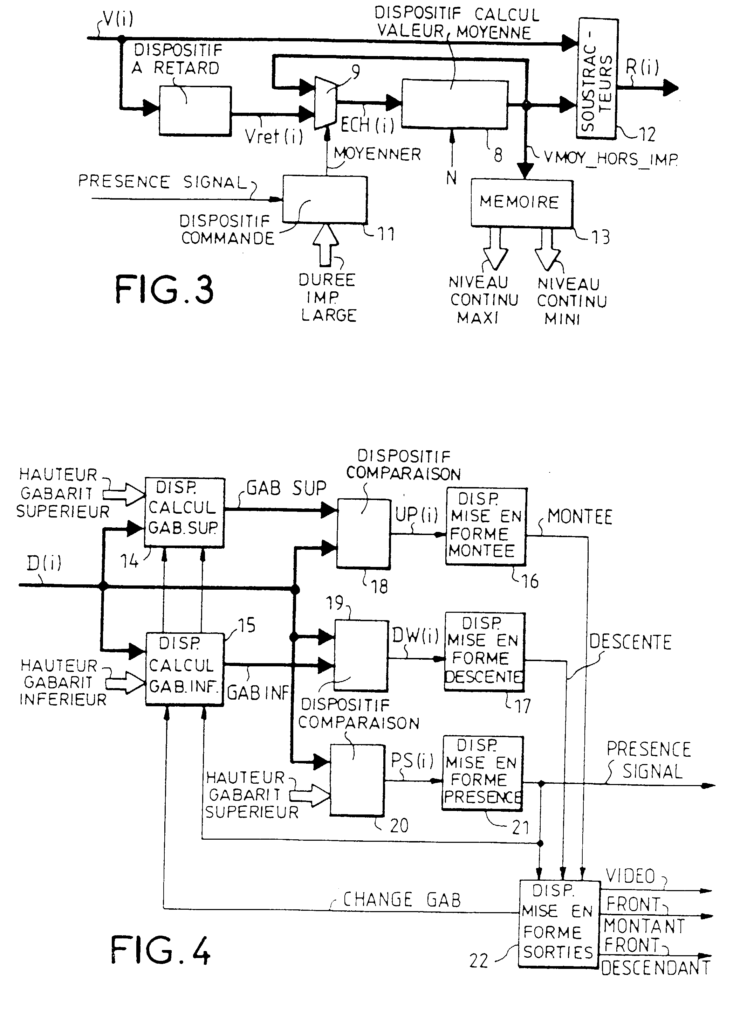

Le dispositif d'extraction 2 comporte de la manière représentée à la figure 3, un circuit 8 de calcul de valeur moyenne formé par un registre accumulateur ou tout dispositif équivalent couplé par son entrée à la sortie d'un multiplexeur 9 à deux entrées. La première entrée du circuit multiplexeur 9 est reliée à la sortie du circuit 8. Sa deuxième entrée reçoit les échantillons de signal Vret(i) équivalents aux échantillons V(i) fournis par le convertisseur 1 mais retardés d'une durée déterminée $\tau$ par un dispositif à retard 10. Le cumul des échantillons dans le circuit 8 a lieu sur $N=2^m$ échantillons successifs.

Dans le cas d'une réalisation à registre accumulateur, le résultat cumulé obtenu est décalé dans le registre pour abandonner les m bits de poids faible afin d'obtenir une valeur moyenne des N échantillons. Un dispositif de commande 11 assure la commande du multiplexeur 9. Un circuit soustracteur 12 à deux entrées d'opérande reçoit sur une première entrée les échantillons V(i) provenant du convertisseur analogique-numérique 1, et reçoit sur sa deuxième entrée la valeur moyenne du signal contenu dans le registre accumulateur 8. Le résultat obtenu à la sortie du circuit soustracteur 12 correspond dans ces conditions au signal V(i) diminué de la composante continue.

Sur la figure 3 un signal "PRESENCE SIGNAL" est appliqué sur le circuit de commande II chaque fois qu'une impulsion est détectée par le dispositif de détection 5 de la figure 2, avec un retard lié au temps de retard $\tau$. Le circuit 11 positionne ou non un signal "MOYENNER". Lorsque le signal "MOYENNER" n'est pas positionné l'échantillon de signal Vret(i) est pris en compte par le circuit multiplexeur 9 pour être appliqué à l'entrée du circuit de calcul de valeur moyenne 8.

Lorsque le signal "MOYENNER" est positionné, c'est-à-dire lorsqu'il n'y a pas d'impulsion détectée, l'échantillon entrant pris en compte par le circuit 8 de calcul de valeur moyenne correspond à la dernière moyenne calculée et désignée par VMOY_Hors_IMP sur la figure 3.

Le signal "MOYENNER" est fourni par le circuit 11 lorsque le signal "PRESENCE SIGNAL" est déjà positionné depuis moins d'une durée désignée "DUREE IMP_Max", afin de pouvoir recommencer à calculer le niveau continu dans le cas où une impulsion très large est détectée, correspondant à l'apparition d'un brouilleur par exemple.

Une moyenne glissante "VMOY Hors_IMP" est ainsi calculée sur N échantillons successifs, N étant programmable et pouvant prendre par exemple les valeurs 4, 8 ou 16. A la sortie du circuit soustracteur 12, le signal Ri obtenu est le signal Vi auquel est ôté le niveau continu "VMOY_Hors_IMP".

Le maximum et le minimum pris par la variable "VMOY Hors-IMP" est mémorisé dans une mémoire 13 et les variables correspondantes "Niveau-continu-maxi", "Niveau-CONTINU-mini" sont lues et réinitialisées par le dispositif de caractérisation de brouillage 7.

Un algorithme de mise en oeuvre correspondant peut être le suivant:

$$\text{Vret(i) = V(i-3)} \qquad \text{(retard de 150 ns)}$$

$$\text{ECH(i) = Vir(t)} \quad \text{si MOYENNER = 0}$$

$$\text{= VMOY\_HORS\_IMP si MOYENNER = 1}$$

$$\text{MOYENNER} \quad = \quad \text{PRESENCE SIGNAL ANDNOT}$$

$$\text{PRESENCE SIGNAL retardée de DUREE\_IMP\_MAX}$$

$$\text{VMOY\_HORS-MP = (ECH (i) + ECH (i-1) + .... + ECH (i-(N-1)))/N}$$

où N est le nombre d'échantillons prise en compte dans le moyennage

$$R(i) \qquad = \text{V(i) - VMOY\_HORS\_IMP} \quad \text{si V(i) - VMOY\_HORS\_IMP > 0}$$

$$= O \qquad\qquad\qquad \text{si V(i) - VMOY\_HORS\_IMP < 0}$$

$$\text{NIVEAU\_CONTINU\_MINI = minimum de VMOY\_HORS\_IMP pendant T}$$

$$\text{NIVEAU\_CONTINU-MAXI = maximum de VMOY\_HORS\_IMP pendant T}$$

Le signal Ri obtenu est transmis au dispositif de désensibilisation 4 afin de désensibiliser plus ou moins le dispositif de détection 5. Cette désensibilisation a lieu en enlevant un niveau constant de signal désigné ci-après par "SEUIL" pour former un échantillon Di avec les conditions que si Ri-"SEUIL" est supérieur à zéro alors Di=R(i)-SEUIL ou que si Ri-"SEUIL" est inférieur à zéro alors Di prend la valeur nulle.

La fonction de détection des fronts qui est exécutée par le dispositif de détection 5 effectue la reconnaissance des "fronts" montants et descendants sur les échantillons de signal $D_i$ fournis par le dispositif de désensibilisation 4 de la figure 2. Elle constitue en cela le coeur du dispositif de détection d'impulsions.

Dans le principe de détection adopté, un "front" est défini comme le dépassement d'un niveau de référence par deux échantillons $D_i$ successifs. L'algorithme mise en oeuvre consiste à vérifier que les échantillons $D_{(i)}$ restent dans un gabarit, par une comparaison de la grandeur des échantillons (Di) à des valeurs supérieures "GAB SUP" et inférieures "GAB INF" déterminées de ce gabarit. Le franchissement de ce gabarit par valeur supérieure (D(i) > GAB SUP) entraîne la détection d'une "montée" de signal et provoque un changement du gabarit. Le franchissement par valeur inférieure (Di < GAB INF) entraîne la détection d'une "descente" du signal et provoque aussi un changement du gabarit (CHANGE GAB). Les valeurs GAB SUP et GAB INF sont calculées à partir de la grandeur de l'échantillon D(i-1) qui précède l'échantillon courant Di et des grandeurs HAUTEUR GABARIT SUPERIEURE et HAUTEUR GABARIT INFERIEURE. La présence d'un signal utile est signalée par un signal PRESENCE SIGNAL. Un dépassement par valeur supérieure (D(i) > HAUTEUR GABARIT SUPERIEURE) entraîne la détection d'une présence signal.

Le dispositif de détection des fronts 5 correspondant à ce fonctionnement comporte de la manière représentée à la figure 4 deux dispositifs 14, 15 de calcul de gabarit supérieur et inférieur couplés respectivement à des étages de mise en forme 16 et 17 par l'intermédiaire de dispositifs de comparaisons 18 et 19. Il comporte également un dispositif de comparaison 20 couplé à un étage de mise en forme 21. Un dispositif de mise en forme 22 remet en forme les fronts de signal fournis par les étages 16, 17 et 21 et transmet un signal de changement de gabarit au dispositif de calcul 15. Les hauteurs des gabarits supérieur et inférieur sont fournies par le dispositif 7 de la figure 2 et sont appliquées respectivement sur des premières entrées des dispositifs de calcul 14 et 15. La hauteur de l'échantillon courant Di est appliquée sur les deuxièmes entrées des dispositifs 14 et 15. Suivant l'état du signal de commande "CHANGE GAB" fourni par le dispositif de mise en forme 22 et l'état "PRESENCE SIGNAL" fourni par le dispositif de mise en forme 21 les valeurs "GAB SUP" et "GAB INF" fournies par les dispositifs de calcul 14 et 15 sont, soit inchangé si le signal "CHANGE GAB" est dans l'état binaire 0, ou modifiées respectivement suivant les valeurs D(i-1)+HAUTEUR GABARIT SUPERIEURE ou D(i-1)-HAUTEUR GABARIT INFERIEURE si le signal "CHANGE GAB" est dans l'état binaire 1, ou encore placé à HAUTEUR DU GABARIT SUPERIEURE si le signal "PRESENCE SIGNAL" est au niveau binaire 0, ou placé au niveau 0 si le signal "PRESENCE SIGNAL" est au niveau 0. Le circuit de comparaison 18 fournit un signal "UP" de niveau binaire 1 si D(i) > GAB SUP ou un signal de niveau binaire 0 dans le cas contraire. Le circuit de comparaison 19 fournit un signal DW(i) de niveau binaire 1 si D(i) < GAB INF ou un signal de niveau binaire 0 dans le cas contraire. Le circuit de comparaison 20 fournit un signal PS(i) de niveau binaire 1 lorsque Di > HAUTEUR GABARIT SUPERIEURE et un signal binaire de niveau 0 dans le cas contraire. Le circuit de mise en forme 16 fournit un signal "MONTEE" de niveau binaire 1 lorsque à l'instant i courant le signal "UP" = 1 et lorsque à l'instant i-1 précédent le signal "UP" (i-1) état déjà dans l'état 1.

Le signal "MONTEE" est placé au niveau 0 si "UP" à l'instant (i) = 0 et "UP" à l'instant i-1 sont au niveau 0. Dans les autres cas le signal MONTEE est inchangé.

Le signal "DESCENTE" fourni par l'étage de mise en forme 17 est placé au niveau 1 lorsque les signaux Dw(i) et Dw(i-1) sont dans l'état 1. Le signal "DESCENTE" est placé au niveau 0 lorsque le signal DW(i) = 0 et le signal DW(i-1) = 0. Dans les autres cas le signal DESCENTE est inchangé. Le signal PRESENCE SIGNAL est placé à l'état 1 si le signal PS(i) fourni par le dispositif de comparaison 20 est à l'état 1 et si le signal PS(i-1) à l'instant i-1 précédent est aussi à l'état 1. Il est placé à l'état 0 si les signaux PS(i) et PS(i-1) sont à l'état 0. Dans les autres cas le signal PRESENCE SIGNAL reste inchangé. Le signal CHANGE GAB fourni par le dispositif de mise en forme 22 est placé à l'état 1 si les signaux PRESENCE SIGNAL, MONTEE et DESCENTE sont simultanément dans l'état 1, sinon le signal CHANGE GAB prend la valeur 0.

Le dispositif de mise en forme 22 fournit également des signaux binaires indiqués FRONT MONTANT, FRONT DESCENDANT et VIDEO. Le signal FRONT MONTANT prend la valeur binaire 1 lorsque le signal MONTEE(i) de l'instant i et celui de l'instant (i-1) ont respectivement les valeurs 0 et 1. Ce signal prend la valeur 0 dans les autres cas. Le signal FRONT DESCENDANT prend la valeur binaire 1 si les signaux DESCENTE(i) de l'instant i et DESCENTE de l'instant (i-1) ont respectivement les valeurs 1 et 0 ou si les signaux PRESENCE SIGNAL(i) des instants i et i-1 ont tous les deux pour valeur O. Dans les autres cas le signal FRONT DESCENDANT prend la valeur 0. Le signal VIDEO prend la valeur 1 si les signaux "PRESENCE SIGNAL", "MONTEE" et "DESCENTE" ont respectivement les valeurs 1, 0 et 0. Le signal VIDEO prend la valeur 0 dans le cas contraire.

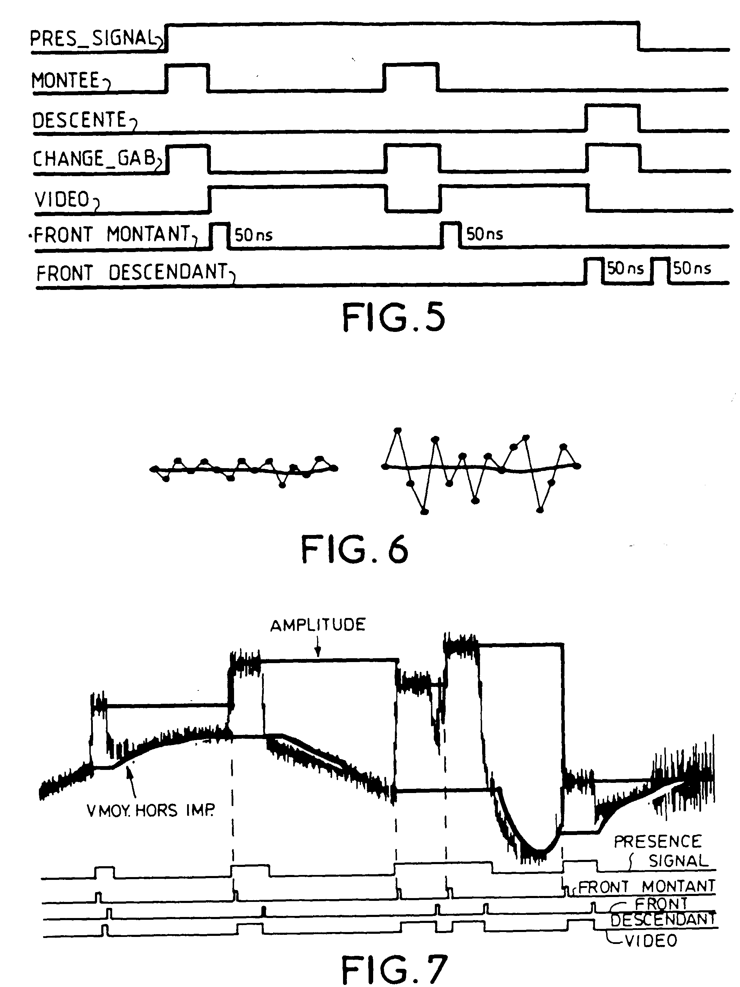

Les différents cas précédents sont illustrés sur le diagramme des temps de la figure 5 et illustrés par le diagramme de la figure 7.

L'algorithme correspondant est le suivant :

```
    *  GAB SUP  = inchangé                                    si CHANGE GAB = 0
                = D(i-1) + HAUTEUR GABARIT SUPERIEURE          si CHANGE GAB – 1
                = HAUTEUR GABARIT SUPERIEURE                   si PRESENCE SIGNAL = 0
    *  GAB INF  = inchangé                                    si CHANGE GAB = 0
                = D(i-1) - HAUTEUR GABARIT INFERIEURE          si CHANGE GAB = 0
                = 0                                           si PRESENCE SIGNAL = 0
    *  UP(i)    = 1           si D(i) > GAB SUP
                = 0           si D(i) < GAB SUP
    *  DW(i)    = 1           si D(i) < GAB INF
                = 0           si D(i) > GAB INF
    *  PS(i)    = 1           si D(i) > HAUTEUR GABARIT SUPERIEURE
                = 0           si D(i) < HAUTEUR GABARIT SUPERIEURE
    * MONTEE    = 1           si UP(i) = 1 ET UP(i-1) = 1
                = 0           si UP(i) = 0 ET UP(i-1) = 0
                = inchangé    sinon
    * DESCENTE  = 0           si DW(i) = 1 ET DW(i-1) = 1
                = 0           si DW(i) = 0 ET DW(i-1) = 0
                = inchangé    sinon


    * PRESENCE SIGNAL = 1     si PS(i) = 1 ET PS(i-1) = 1
                     = 0      si PS(i) = 0 ET PS(i-1) = 0
                     = inchangé    sinon
    * CHANGE GAB = 1     si PRESENCE SIGNAL=1 ET MONTEE=1 et DESCENTE (i)=1
                 = 0     sinon
    * FRONT MONTANT = 1  si MONTEE(i) = 0 et MONTEE(i-1) = 1    (fin d'une MONTEE)
                    = 0  sinon
    * FRONT DESCENDANT = 1 si DESCENTE(i) = 1 ET DESCENTE(i-1) = 0 (début d'une
                             descente)
                             OU
                           PRESENCE SIGNAL (i) = 0 et PRESENCE SIGNAL (i-1)=0
                           (fin d'une PRESENCE SIGNAL)
                       = 0  sinon
    *  VIDEO  = 1 si     PRESENCE SIGNAL=1 ET MONTEE=0 et DESCENTE(i)=0
              =    sinon
```

La fonction d'évaluation du bruit qui est exécutée par le dispositif 3 permet de quantifier la dispersion des échantillons autour du niveau continu en dehors des impulsions afin de caractériser la qualité du signal hors impulsion. Le but est de pouvoir différencier des situations telles que celles montrées à la figure 6.

Pour réduire ceci le dispositif 3 comptabilise par unité de temps le nombre d'échantillons qui dépassent un seuil déterminé de bruit. Le résultat de ce comptage désigné par NBR ECH BRUIT, sur la figure 2 est pris en compte à intervalle régulier par le dispositif de caractérisation 7.

Un algorithme permettant une mise en oeuvre de cette fonction peut être le suivant :

```
    * NBR ECH BRUIT   = NBR ECH BRUIT+1     si R(i) > SEUIL BRUIT
                                            ET PRESENCE SIGNAL = 0
                      = NBR ECH BRUIT       PRESENCE SIGNAL = 1
                      = 0                   à la prise en compte par la
                                            fonction (6)
```

La fonction de calcul du niveau d'impulsion qui est exécuté par le dispositif 6 permet d'associer au signal "VIDEO" un niveau.

Pour cela le signal V(i) est recalé temporellement afin de tenir compte du retard engendré par les dispositifs 2, 4 et 5 de la figure 2 sur les signaux FRONT MONTANT et FRONT DESCENDANT.

Le signal AMPLITUDE est associé au FRONT MONTANT et correspond à la moyenne arithmétique des 4 échantillons qui suivent l'impulsion FRONT MONTANT, à condition qu'aucune impulsion FRONT DESCENDANT n'apparaisse pendant ces 4 cycles. Ceci permet d'assurer l'élimination d'impulsions fines de 200 ns ou moins, par exemple.

Un algorithme correspondant peut être le suivant :

∗ Si p est l'échantillon qui a généré l'impulsion FRONT MONTANT (c'est-à-dire que p et p-1 ont dépassé du gabarit GAB SUP)

$$AMPLITUDE = (V(p) + V(p+1) + V(p+2) + V(p+3))/4$$

si aucune impulsion FRONT DESCENDANT n'arrive pendant les cycles p à p+3.

La fonction de caractérisation du brouillage et d'adaptation dynamique des caractéristiques de détection qui est exécutée par le dispositif 7 permet de contrôler l'ensemble des paramètres de détection.

Celui-ci effectue à intervalle de temps régulier T (typiquement 20 ms), la lecture des mesures NIVEAU CONTINU MIN, NIVEAU CONTINU MAX et NBR ECH BRUIT fournis par les dispositifs 2 et 3 de la figure 2 et provoque leur prise en compte et leur remise à zéro.

La caractérisation d'un brouillage a lieu par comparaison du nombre d'échantillons bruit de NBR ECH BRUIT fourni par le dispositif 3 par rapport à une valeur de consigne NBR ECH BRUIT MAX. Elle permet de déterminer un brouillage de type WGN ou AMCW, WGN étant l'abréviation anglo-saxonne de "White Gaussian Noise".

La comparaison des valeurs NIVEAU CONTINU MIN et NIVEAU CONTINU MAX permet de différencier un brouillage AMCW et CW.

Le niveau moyen du brouillage est donné par :

$$NIVEAU\ BROUILLEUR = (NIVEAU\ CONTINU\ MIN + NIVEAU\ CONTINU\ MAX)/2$$

∗     SI NBR ECH BRUIT > NBR ECH BRUIT MAX
   alors PRESENCE d'un brouillage WGN
∗     SI (NIVEAU CONTINU MAX - NIVEAU CONTINU MIN) > DEBUT AMCW
   alors PRESENCE d'un brouillage AMCW
   sinon PRESENCE d'un brouillage CW
  de NIVEAU BROUILLEUR = (NIVEAU CONTINU MIN + NIVEAU CONTINU MAX)/2

L'adaptation dynamique des caractéristiques de détection en plaçant le seuil de détection de comptage d'échantillons de bruit a lieu systématiquement X db en dessous du seuil de détection appelé SEUIL. Ceci a lieu en comptant dans la variable NBR ECH BRUIT, le nombre d'échantillons compris entre SEUIL BRUIT et SEUIL.

A chaque lecture de la valeur NBR ECH BRUIT:

∗     Si NBR ECH BRUIT > NBR MAX 1
   alors SEUIL = SEUIL + 1
    SEUIL BRUIT = SEUIL BRUIT + 1
∗     Si NBR ECH BRUIT > NBR MAX 2
   alors SEUIL = SEUIL + 10
    SEUIL BRUIT = SEUIL BRUIT + 10
∗     Si NBR ECH BRUIT < NBR MIN 1
   alors SEUIL = SEUIL - 1
    SEUIL BRUIT = SEUIL BRUIT - 1
∗     Si NBR ECH BRUIT < NBR MIN 2
   alors SEUIL = SEUIL - 10
    SEUIL BRUIT = SEUIL BRUIT - 10

Si le rapport signal/bruit diminue, le signal utile a tendance à être moins "stable" au sommet de l'impulsion. Il est alors nécessaire d'augmenter la valeur des gabarits HAUTEUR GABARIT SUPERIEUR et HAUTEUR GABARIT INFERIEUR au risque d'entraîner une moins bonne séparation des impulsions chevauchantes mais avec l'avantage d'obtenir une meilleure tenue au brouillage. Dans ces conditions, l'algorithme peut être complété de la façon suivante :

∗     SI NIVEAU BROUILLEUR > BROUILLEUR MAX
   alors doubler HAUTEUR GABARIT

∗   SI NIVEAU BROUILLEUR < BROUILLEUR MAX
        alors revenir HAUTEUR GABARIT nominale.

Naturellement le dispositif de mise en oeuvre de l'invention décrit précédemment n'est pas unique, il est bien évident que d'autres modes de réalisation sont également possibles notamment en remplaçant les circuits câblés du dispositif par un ou plusieurs microprocesseurs convenablement programmés selon les algorithmes décrits.

**Revendications**

1.  Dispositif de détection et de caractérisation d'impulsions radar comportant un récepteur d'impulsions caractérisé en ce qu'il comprend un dispositif convertisseur analogique numérique (1) couplé au récepteur d'impulsions, un dispositif d'extraction du niveau continu (2) du signal fourni par le récepteur, couplé au dispositif convertisseur, un dispositif de détection de fronts (5) et un dispositif de caractérisation de brouillage (7), qui sont couplés au dispositif d'extraction de niveau continu (2), pour détecter la présence de fronts montant ou descendant et de brouilleurs dans le signal fourni par le récepteur.

2.  Dispositif selon la revendication 1 caractérisé en ce qu'il comprend un dispositif d'évaluation de bruit (3) couplé entre le dispositif d'extraction de niveau continu (2) et le dispositif de caractérisation de brouillage (7).

3.  Dispositif selon l'une quelconque des revendications 1 et 2 caractérisé en ce qu'il comprend un dispositif de désensibilisation (4) à seuil couplé entre le dispositif d'extraction de niveau continu (2) et le dispositif de détection de fronts (5).

4.  Dispositif selon l'une quelconque des revendications 1 à 3 caractérisé en ce qu'il comprend un dispositif de calcul de niveau d'impulsions couplé à la sortie du convertisseur analogique numérique (1).

5.  Dispositif selon l'une quelconque des revendications 1 à 4 caractérisé en ce que le dispositif d'extraction du niveau continu (2) comporte un circuit de calcul de la valeur moyenne (8) des échantillons de signal fournis par le convertisseur analogique numérique (1) couplé à un circuit soustracteur (12) pour soustraire des échantillons de signal fournis par le convertisseur analogique numérique (1) la valeur moyenne calculée.

6.  Dispositif selon la revendication 5 caractérisé en ce que le dispositif d'extraction de niveau continu (2) comprend une mémoire (13) pour mémoriser les valeurs moyennes maximale et minimale calculées par le circuit de calcul de la valeur moyenne (8).

7.  Dispositif selon l'une quelconque des revendications 1 à 6 caractérisé en ce que le dispositif de détection (5) comprend un premier (14) et un deuxième (15) circuit de calcul de gabarit respectivement supérieur et inférieur des échantillons de signal, couplés respectivement à un premier (18) et deuxième (19) circuit comparateur pour détecter les fronts montant et descendant du signal.

8.  Dispositif selon la revendication 7 caractérisé en ce que le dispositif de détection (5) comprend un troisième circuit comparateur (20) du niveau du signal à la hauteur de gabarit supérieur pour signaler la présence d'une impulsion de signal.

9.  Dispositif selon l'une quelconque des revendications 1 à 8 caractérisé en ce que le dispositif d'évaluation de bruit (3) compte le nombre d'échantillons de signal fournis par le dispositif d'extraction (2) qui dépassent un seuil déterminé de bruit pour l'appliquer au dispositif de caractérisation (7).

10. Dispositif selon l'une quelconque des revendications 1 à 9 caractérisé en ce que le dispositif de caractérisation (7) effectue la lecture des niveaux continus maximum et minimum du signal fourni par le dispositif d'extraction (2) et du nombre d'échantillons de bruit fournis par le dispositif d'évaluation de bruit (3), pour caractériser les signaux brouilleurs du signal.

11. Dispositif selon la revendication 10 caractérisé en ce que le dispositif de caractérisation (7) ajuste les hauteurs de gabarits de référence pour le calcul des gabarits supérieur et inférieur effectué par le dispositifs de calcul de gabarit (15).

**12.** Dispositif selon l'une quelconque des revendications 1 à 11 caractérisé en ce que les dispositifs d'extraction de niveau continu (2), d'évaluation de bruit (3) de détection de seuil (4), de détection de fronts (5) de calcul de niveau d'impulsion (6) et de caractérisation de brouillage sont formés par un ou plusieurs microprocesseurs microprogrammés.

**Patentansprüche**

**1.** Vorrichtung zur Erfassung und Charakterisierung von Radarimpulsen, die einen Impulsempfänger enthält, dadurch gekennzeichnet, daß sie einen Analog/Digitalwandler (1), der an den Impulsempfänger gekoppelt ist, eine an den Wandler gekoppelte Vorrichtung (2) zur Extraktion des Gleichspannungspegels aus dem vom Empfänger gelieferten Signal, eine Vorrichtung (5) zur Flankenerfassung und eine Vorrichtung (7) zur Charakterisierung der Störung enthält, die an die Vorrichtung (2) zur Extraktion des Gleichspannungspegels gekoppelt sind, um das Vorliegen von Anstiegsflanken oder Abfallflanken und von Störungen in dem vom Empfänger gelieferten Signal zu erfassen.

**2.** Vorrichtung nach Anspruch 1, dadurch gekennzeichnet, daß sie eine Vorrichtung (3) zur Bewertung des Rauschens enthält, die zwischen die Vorrichtung (2) zur Extraktion des Gleichspannungspegels und die Vorrichtung (7) zur Charakterisierung der Störung eingefügt ist.

**3.** Vorrichtung nach einem beliebigen der Ansprüche 1 und 2, dadurch gekennzeichnet, daß sie eine Vorrichtung (4) zur Desensibilisierung mit einer Schwelle enthält, die zwischen die Vorrichtung (2) zur Extraktion des Gleichspannungspegels und die Vorrichtung (5) zur Flankenerfassung eingefügt ist.

**4.** Vorrichtung nach einem beliebigen der Ansprüche 1 bis 3, dadurch gekennzeichnet, daß sie eine Vorrichtung zur Berechnung des Impulspegels enthält, die an den Ausgang des Analog/Digitalwandlers (1) gekoppelt ist.

**5.** Vorrichtung nach einem beliebigen der Ansprüche 1 bis 4, dadurch gekennzeichnet, daß die Vorrichtung (2) zur Extraktion des Gleichspannungspegels eine Schaltung (8) zur Berechnung des Mittelwerts der vom Analog/Digitalwandler (1) gelieferten Signaltastproben enthält, die an eine Subtraktionsschaltung (12) gekoppelt ist, in der von den vom Analog/Digitalwandler (1) gelieferten Signaltastproben der berechnete Mittelwert abgezogen wird.

**6.** Vorrichtung nach Anspruch 5, dadurch gekennzeichnet, daß die Vorrichtung (2) zur Extraktion des Gleichspannungspegels einen Speicher (13) enthält, der die von der Schaltung (8) zur Berechnung des Mittelwerts berechneten maximalen und minimalen Mittelwerte speichert.

**7.** Vorrichtung nach einem beliebigen der Ansprüche 1 bis 6, dadurch gekennzeichnet, daß die Vorrichtung (5) zur Flankenerfassung zwei Schaltungen (14, 15) zur Berechnung des oberen beziehungsweise unteren Sollbereichs der Signaltastproben enthält, die an eine erste beziehungsweise zweite Vergleichsvorrichtung (18, 19) gekoppelt sind, um die Anstiegsflanke beziehungsweise die Abfallflanke des Signals zu erfassen.

**8.** Vorrichtung nach Anspruch 7, dadurch gekennzeichnet, daß die Vorrichtung (5) zur Flankenerfassung eine dritte Vergleichsvorrichtung (20) zum Vergleich des Signal-Pegels mit der Höhe des oberen Sollbereichs enthält, um das Vorliegen eines Signalimpulses festzustellen.

**9.** Vorrichtung nach einem beliebigen der Ansprüche 1 bis 8, dadurch gekennzeichnet, daß die Vorrichtung (3) zur Bewertung des Rauschens die Anzahl von Signaltastproben zählt, die von der Vorrichtung (2) zur Extraktion des Gleichspannungspegels geliefert werden und eine vorgegebene Rauschschwelle überschreiten, um diese Zahl an die Vorrichtung (7) zur Charakterisierung der Störung zu liefern.

**10.** Vorrichtung nach einem beliebigen der Ansprüche 1 bis 9, dadurch gekennzeichnet, daß die Vorrichtung (7) zur Charakterisierung der Störung maximale und minimale Gleichstrompegel des von der Vorrichtung (2) zur Extraktion des Gleichspannungspegels gelieferten Signals und die Anzahl von Rauschtastproben, die von der Rauschbewertungsvorrichtung (3) geliefert werden, ausliest, um die Störungssignale in dem Signal zu charakterisieren.

**11.** Vorrichtung nach Anspruch 10, dadurch gekennzeichnet, daß die Vorrichtung (7) zur Charakterisierung der Störung die Höhe von Bezugssollbereichen für die von der Vorrichtung (15) zur Sollbereichsberechnung durchgeführte Berechnung des oberen und unteren Sollbereichs einstellt.

**12.** Vorrichtung nach einem beliebigen der Ansprüche 1 bis 11, dadurch gekennzeichnet, daß die Vorrichtung (2) zur Extraktion des Gleichspannungspegels, die Vorrichtung (3) zur Rauschbewertung, die Vorrichtung (4) zur Desensibilisierung, die Vorrichtung (5) zur Flankenerfassung, die Vorrichtung (6) zur Berechnung von Impulspegeln und die Vorrichtung (7) zur Charakterisierung der Störung von mindestens einem mikroprogrammierten Mikroprozessor gebildet werden.

## Claims

**1.** Device for the detection and characterizing of radar pulses comprising a receiver of pulses, characterized in that it comprises an analog-digital converter device (1) coupled to the pulse receiver, a device for the extraction of the continuous level (2) of the signal given by the receiver coupled to the coverter device an edge detection device (5) and a scrambling characterizing device (7) which are coupled to the device for the extraction of the continuous level to detect the presence of rising or falling edges and of scramblers in the signal given by the receiver.

**2.** Device according to Claim 1, characterized in that it comprises a noise evaluation device (3) coupled between the continuous level extraction device (2) and the scrambling characterizing device (7).

**3.** Device according to either of Claims 1 or 2, characterized in that it comprises a threshold desensitization device (4) coupled between the continuous level extraction device (2) and the edge detection device (5).

**4.** Device according to any one of Claims 1 to 3, characterized in that it comprises a pulse level computation device coupled to the output of the analog-digital converter (11).

**5.** Device according to any one of Claims 1 to 4, characterized in that the continuous level extraction device (2) has a circuit to compute the average value (8) of the signal samples given by the analog-digital converter (1) coupled to a subtractor circuit (12) to subtract the computed average value from the signal samples given by the analog-digital converter (1).

**6.** Device according to Claim 5, characterized in that the continuous level extraction device (2) comprises a memory (13) to memorize the maximum and minimum values computed by the circuit for the computation of the average value (8).

**7.** Device according to any one of Claims 1 to 6, characterized in that the detection device (5) includes a first (14) circuit and a second (15) circuit for the computation of a respectively upper template and lower template of the signal samples, coupled respectively to a first comparator circuit (18) and a second comparator circuit (19) to detect the rising and falling edges of the signal.

**8.** Device according to Claim 7, characterized in that the detection device (5) comprises a third comparator circuit (20) to compare the level of the signal with the upper template height to report the presence of a signal pulse.

**9.** Device according to any one of Claims 1 to 8, characterized in that the noise evaluation device (3) counts the number of signal samples given by the extraction device (2) which go beyond a determined noise threshold to apply it to the characterization device (7).

**10.** Device according to any one of Claims 1 to 9, characterized in that the characterization device (7) carries out the reading of the maximum and minimum continuous levels of the signal given by the extraction device (2) and of the number of noise samples given by the noise evaluation device (3) to characterize the signal scrambler signals.

**11.** Device according to Claim 10, characterized in that the characterizing device (7) adjusts the heights of the reference templates for the computation of the upper and lower templates performed by the template computation devices (15).

**12.** Device according to any one of Claims 1 to 11, characterized in that the continuous level extraction (2), noise evaluation (3), threshold detection (4), edge detection (5), pulse level computation (6) and scrambling characterizing devices are formed by one or more microprogrammed microprocessors.

FIG.1

FIG.2

## FIG.3

V(i)

DISPOSITIF A RETARD

DISPOSITIF CALCUL VALEUR, MOYENNE

SOUSTRAC- TEURS

R(i)

12

Vret(i)

ECH(i)

9

MOYENNER

8

VMOY_HORS_IMP.

N

PRESENCE SIGNAL

DISPOSITIF COMMANDE

11

MEMOIRE

13

DUREE IMP. LARGE

NIVEAU CONTINU MAXI

NIVEAU CONTINU MINI

## FIG.4

HAUTEUR GABARIT SUPERIEUR

DISP. CALCUL GAB.SUP.

GAB SUP

DISPOSITIF COMPARAISON

UP(i)

DISP. MISE EN FORME MONTEE

MONTEE

14

16

D(i)

18

15

19

DISP. MISE EN FORME DESCENTE

DW(i)

DESCENTE

HAUTEUR GABARIT INFERIEUR

DISP. CALCUL GAB.INF.

GAB INF

17

DISPOSITIF COMPARAISON

HAUTEUR GABARIT SUPERIEUR

PS(i)

DISP. MISE EN FORME PRESENCE

PRESENCE SIGNAL

20

21

CHANGE GAB

DISP. MISE EN FORME SORTIES

VIDEO

FRONT MONTANT

FRONT

22

DESCENDANT

FIG.5

FIG. 6

FIG.7